# EUROPEAN PATENT APPLICATION

(11) **EP 4 106 261 A1**
(43) Date of publication of application: **21.12.2022**
(21) Application number: 20918334.2
(22) Date of filing: 12.02.2020
(51) Int. Cl.: H04L 5/16

(54) **UPLINK AND DOWNLINK TRANSMISSION CONFLICT RESOLUTION METHOD AND APPARATUS, AND STORAGE MEDIUM**

(71) Applicant: Beijing Xiaomi Mobile Software Co., Ltd., Beijing 100085 (CN)
(72) Inventor: ZHAO, Qun, Beijing 100085 (CN)
(74) Representative: Gunzelmann, Rainer
(86) International application number: PCT/CN2020/074833
(87) International publication number: WO 2021/159297

(57) **Abstract**

An uplink and downlink transmission conflict resolution method and apparatus, and a storage medium, which belong to the technical field of communications. The method is applied to a terminal which performs communication by using a half-duplex frequency division multiplexing manner. The method comprises: when an uplink and downlink transmission conflict occurs at a terminal, determining the priority order of uplink transmission and downlink transmission (201); and according to the priority order, the terminal performing uplink transmission or receiving a downlink transmission from a base station (202). When an uplink and downlink transmission conflict occurs at a terminal, the priority order of uplink transmission and downlink transmission is determined, and uplink transmission is performed or a downlink transmission from a base station is received according to the priority order, such that the problem of an uplink and downlink transmission conflict at a terminal which performs communication by using a half-duplex frequency division multiplexing manner is solved, the uplink and downlink transmission conflict at the terminal is prevented, and the communication quality is improved.

## Description

### TECHNICAL FIELD

Embodiments of the disclosure relate to the field of communication technologies, and in particular, to a method, a device and a storage medium for handling a collision between uplink transmission and downlink transmission.

### BACKGROUND

The continuous emergence of new-generation Internet applications puts forward higher requirements for wireless communication technologies, driving the continuous evolution of mobile communication systems to satisfy needs of applications. The mobile communication system needs to appropriately reduce the complexity, size and power consumption of user equipment (UE) while satisfying service requirements. The UE of this type of service is called UE with reduced capacity.

In a frequency division duplexing (FDD) system, uplink transmission and downlink transmission of ordinary UE can be performed at the same time, but for half-duplex UE with reduced capacity, only the uplink transmission or the downlink transmission can be performed at the same time. When the uplink transmission and the downlink transmission need to be performed at the same time, the UE with reduced capacity will have a collision between the uplink transmission and the downlink transmission.

Therefore, how to handle the collision between the uplink transmission and the downlink transmission of the UE with reduced capacity is urgent to be solved.

### SUMMARY

Embodiments of the disclosure provide a method, a device and a storage medium for handling a collision between uplink transmission and downlink transmission. The technical solutions are as follows.

According to an aspect, a method for handling a collision between uplink transmission and downlink transmission is provided in embodiments of the disclosure. The method is applicable to a terminal that employs a half-duplex frequency division multiplexing manner for communication. The method includes: determining by the terminal a priority order between the uplink transmission and the downlink transmission in response to the collision between the uplink transmission and the downlink transmission; and performing by the terminal the uplink transmission or receiving by the terminal the downlink transmission from a base station, according to the priority order.

Alternatively, determining the priority order includes at least one of: determining a priority between the uplink transmission and the downlink transmission based on transmission time; determining a priority between the uplink transmission and the downlink transmission based on priority information of transmission channels; determining a priority between the uplink transmission and the downlink transmission based on types of transmission information; or determining a priority between the uplink transmission and the downlink transmission based on resource allocation manners.

Alternatively, determining by the terminal the priority order between the uplink transmission and the downlink transmission includes: determining by the terminal the priority order between the uplink transmission and the downlink transmission according to transmission indication information, in which the transmission indication information is configured to indicate a transmission behavior of the terminal in response to the collision between the uplink transmission and the downlink transmission.

Alternatively, the transmission indication information includes priority information, and the priority information is configured to indicate a priority between the uplink transmission and the downlink transmission.

Alternatively, the priority information includes: first priority information configured to indicate that a priority of the uplink transmission is higher than a priority of the downlink transmission; or, second priority information configured to indicate that a priority of the downlink transmission is higher than a priority of the uplink transmission.

Alternatively, the transmission indication information includes duration allocation information, and the duration allocation information is configured to indicate a duration during which the uplink transmission is prioritized and a duration during which the downlink transmission is prioritized.

Alternatively, during the duration during which the uplink transmission is prioritized, a priority of the uplink transmission is higher than a priority of the downlink transmission; and during the duration during which the downlink transmission is prioritized, a priority of the downlink transmission is higher than a priority of the uplink transmission.

Alternatively, during the duration during which the uplink transmission is prioritized, a priority between the uplink transmission and the downlink transmission is determined based on a first rule; and during the duration during which the downlink transmission is prioritized, a priority between the uplink transmission and the downlink transmission is determined based on a second rule.

Alternatively, the duration during which the uplink transmission is prioritized and the duration during which the downlink transmission is prioritized are periodic.

Alternatively, the duration is defined according to any of following time-domain units: frame, subframe, time slot or orthogonal frequency division multiplexing (OFDM) symbol.

Alternatively, in response to a first part of a duration of the collision between the uplink transmission and the downlink transmission being in the duration during which the uplink transmission is prioritized, and a second part of the duration of the collision between the uplink transmission and the downlink transmission being in the duration during which the downlink transmission is prioritized: during the duration of the collision between the uplink transmission and the downlink transmission, it is pre-defined or pre-configured that transmission is performed according to the priority order determined in the first part or transmission is performed according to the priority order determined in the second part; or, during the duration of the collision between the uplink transmission and the downlink transmission, it is pre-defined or pre-configured that the uplink transmission is performed preferentially or the downlink transmission is performed preferentially.

Alternatively, the transmission indication information is obtained by receiving a downlink signaling from the base station; or, the transmission indication information is predefined by a protocol.

Alternatively, the collision between the uplink transmission and the downlink transmission includes: the uplink transmission and the downlink transmission occupying a same time-domain unit; and/or, a time interval between the uplink transmission and the downlink transmission, less than handover guard time.

Alternatively, the handover guard time is obtained by receiving a downlink signaling from the base station.

According to another aspect, a method for handling a collision between uplink transmission and downlink transmission is provided in embodiments of the disclosure. The method includes: transmitting by a base station transmission indication information to a terminal that employs a half-duplex frequency division multiplexing manner for communication, in which the transmission indication information is configured to indicate a transmission behavior of the terminal in response to the collision between the uplink transmission and the downlink transmission.

Alternatively, the transmission indication information includes priority information, and the priority information is configured to indicate a priority between the uplink transmission and the downlink transmission.

Alternatively, the priority information includes: first priority information configured to indicate that a priority of the uplink transmission is higher than a priority of the downlink transmission; or, second priority information configured to indicate that a priority of the downlink transmission is higher than a priority of the uplink transmission.

Alternatively, the priority information includes at least one of: priority information based on transmission time, configured to indicate start time of the uplink transmission and start time of the downlink transmission to determine the priority between the uplink transmission and the downlink transmission; priority information based on transmission channels, configured to indicate a physical channel for the uplink transmission and a physical channel for the downlink transmission to determine the priority between the uplink transmission and the downlink transmission; priority information based on types of transmission information, configured to indicate an information type of the uplink transmission and an information type of the downlink transmission to determine the priority between the uplink transmission and the downlink transmission; or priority information based on resource allocation manners, configured to indicate a resource allocation manner of the uplink transmission and a resource allocation manner of the downlink transmission to determine the priority between the uplink transmission and the downlink transmission.

Alternatively, the transmission indication information includes duration allocation information, and the duration allocation information is configured to indicate a duration during which the uplink transmission is prioritized and a duration during which the downlink transmission is prioritized.

Alternatively, during the duration during which the uplink transmission is prioritized, a priority of the uplink transmission is higher than a priority of the downlink transmission; and during the duration during which the downlink transmission is prioritized, a priority of the downlink transmission is higher than a priority of the uplink transmission.

Alternatively, during the duration during which the uplink transmission is prioritized, a priority between the uplink transmission and the downlink transmission is determined based on a first rule; and during the duration during which the downlink transmission is prioritized, a priority between the uplink transmission and the downlink transmission is determined based on a second rule.

Alternatively, the duration during which the uplink transmission is prioritized and the duration during which the downlink transmission is prioritized are periodic.

Alternatively, the duration is defined according to any of following time-domain units: frame, subframe, time slot or OFDM symbol.

Alternatively, in response to a first part of a duration of the collision between the uplink transmission and the downlink transmission being in the duration during which the uplink transmission is prioritized, and a second part of the duration of the collision between the uplink transmission and the downlink transmission being in the duration during which the downlink transmission is prioritized: during the duration of the collision between the uplink transmission and the downlink transmission, it is pre-defined or pre-configured that transmission is performed according to the priority order determined in the first part or transmission is performed according to the priority order determined in the second part; or, during the duration of the collision between the uplink transmission and the downlink transmission, it is pre-defined or pre-configured that the uplink transmission is performed preferentially or the downlink transmission is performed preferentially.

Alternatively, the collision between the uplink transmission and the downlink transmission includes: the uplink transmission and the downlink transmission occupying a same time-domain unit; and/or, a time interval between the uplink transmission and the downlink transmission, less than handover guard time.

According to another aspect, an apparatus for handling a collision between uplink transmission and downlink transmission is provided in embodiments of the disclosure. The apparatus is applicable to a terminal that employs a half-duplex frequency division multiplexing manner for communication. The apparatus includes: an order determining module, configured to determine a priority order between the uplink transmission and the downlink transmission in response to the collision between the uplink transmission and the downlink transmission; and a data transmission module, configured to perform the uplink transmission or receive the downlink transmission from a base station, according to the priority order.

Alternatively, determining the priority order includes at least one of: determining a priority between the uplink transmission and the downlink transmission based on transmission time; determining a priority between the uplink transmission and the downlink transmission based on priority information of transmission channels; determining a priority between the uplink transmission and the downlink transmission based on types of transmission information; or determining a priority between the uplink transmission and the downlink transmission based on resource allocation manners.

Alternatively, the order determining module is configured to determine the priority order between the uplink transmission and the downlink transmission according to transmission indication information, in which the transmission indication information is configured to indicate a transmission behavior of the terminal in response to the collision between the uplink transmission and the downlink transmission.

Alternatively, the transmission indication information includes priority information, and the priority information is configured to indicate a priority between the uplink transmission and the downlink transmission.

Alternatively, the priority information includes: first priority information configured to indicate that a priority of the uplink transmission is higher than a priority of the downlink transmission; or, second priority information configured to indicate that a priority of the downlink transmission is higher than a priority of the uplink transmission.

Alternatively, the transmission indication information includes duration allocation information, and the duration allocation information is configured to indicate a duration during which the uplink transmission is prioritized and a duration during which the downlink transmission is prioritized.

Alternatively, during the duration during which the uplink transmission is prioritized, a priority of the uplink transmission is higher than a priority of the downlink transmission; and during the duration during which the downlink transmission is prioritized, a priority of the downlink transmission is higher than a priority of the uplink transmission.

Alternatively, during the duration during which the uplink transmission is prioritized, a priority between the uplink transmission and the downlink transmission is determined based on a first rule; and during the duration during which the downlink transmission is prioritized, a priority between the uplink transmission and the downlink transmission is determined based on a second rule.

Alternatively, the duration during which the uplink transmission is prioritized and the duration during which the downlink transmission is prioritized are periodic.

Alternatively, the duration is defined according to any of following time-domain units: frame, subframe, time slot or OFDM symbol.

Alternatively, in response to a first part of a duration of the collision between the uplink transmission and the downlink transmission being in the duration during which the uplink transmission is prioritized, and a second part of the duration of the collision between the uplink transmission and the downlink transmission being in the duration during which the downlink transmission is prioritized: during the duration of the collision between the uplink transmission and the downlink transmission, it is pre-defined or pre-configured that transmission is performed according to the priority order determined in the first part or transmission is performed according to the priority order determined in the second part; or, during the duration of the collision between the uplink transmission and the downlink transmission, it is pre-defined or pre-configured that the uplink transmission is performed preferentially or the downlink transmission is performed preferentially.

Alternatively, the transmission indication information is obtained by receiving a downlink signaling from the base station; or, the transmission indication information is predefined by a protocol.

Alternatively, the collision between the uplink transmission and the downlink transmission includes: the uplink transmission and the downlink transmission occupying a same time-domain unit; and/or, a time interval between the uplink transmission and the downlink transmission, less than handover guard time.

Alternatively, the handover guard time is obtained by receiving a downlink signaling from the base station.

According to another aspect, an apparatus for handling a collision between uplink transmission and downlink transmission is provided in embodiments of the disclosure. The apparatus includes: an information transmitting module, configured to transmit transmission indication information to a terminal that employs a half-duplex frequency division multiplexing manner for communication, in which the transmission indication information is configured to indicate a transmission behavior of the terminal in response to the collision between the uplink transmission and the downlink transmission.

Alternatively, the transmission indication information includes priority information, and the priority information is configured to indicate a priority between the uplink transmission and the downlink transmission.

Alternatively, the priority information includes: first priority information configured to indicate that a priority of the uplink transmission is higher than a priority of the downlink transmission; or, second priority information configured to indicate that a priority of the downlink transmission is higher than a priority of the uplink transmission.

Alternatively, the priority information includes at least one of: priority information based on transmission time, configured to indicate start time of the uplink transmission and start time of the downlink transmission to determine the priority between the uplink transmission and the downlink transmission; priority information based on transmission channels, configured to indicate a physical channel for the uplink transmission and a physical channel for the downlink transmission to determine the priority between the uplink transmission and the downlink transmission; priority information based on types of transmission information, configured to indicate an information type of the uplink transmission and an information type of the downlink transmission to determine the priority between the uplink transmission and the downlink transmission; or priority information based on resource allocation manners, configured to indicate a resource allocation manner of the uplink transmission and a resource allocation manner of the downlink transmission to determine the priority between the uplink transmission and the downlink transmission.

Alternatively, the transmission indication information includes duration allocation information, and the duration allocation information is configured to indicate a duration during which the uplink transmission is prioritized and a duration during which the downlink transmission is prioritized.

Alternatively, during the duration during which the uplink transmission is prioritized, a priority of the uplink transmission is higher than a priority of the downlink transmission; and during the duration during which the downlink transmission is prioritized, a priority of the downlink transmission is higher than a priority of the uplink transmission.

Alternatively, during the duration during which the uplink transmission is prioritized, a priority between the uplink transmission and the downlink transmission is determined based on a first rule; and during the duration during which the downlink transmission is prioritized, a priority between the uplink transmission and the downlink transmission is determined based on a second rule.

Alternatively, the duration during which the uplink transmission is prioritized and the duration during which the downlink transmission is prioritized are periodic.

Alternatively, the duration is defined according to any of following time-domain units: frame, subframe, time slot or OFDM symbol.

Alternatively, in response to a first part of a duration of the collision between the uplink transmission and the downlink transmission being in the duration during which the uplink transmission is prioritized, and a second part of the duration of the collision between the uplink transmission and the downlink transmission being in the duration during which the downlink transmission is prioritized: during the duration of the collision between the uplink transmission and the downlink transmission, it is pre-defined or pre-configured that transmission is performed according to the priority order determined in the first part or transmission is performed according to the priority order determined in the second part; or, during the duration of the collision between the uplink transmission and the downlink transmission, it is pre-defined or pre-configured that the uplink transmission is performed preferentially or the downlink transmission is performed preferentially.

Alternatively, the collision between the uplink transmission and the downlink transmission includes: the uplink transmission and the downlink transmission occupying a same time-domain unit; and/or, a time interval between the uplink transmission and the downlink transmission, less than handover guard time.

According to another aspect, a device for handling a collision between uplink transmission and downlink transmission is provided in embodiments of the disclosure. The device is applicable to a terminal that employs a half-duplex frequency division multiplexing manner for communication. The device includes: a processor; and a memory for storing instructions executable by the processor; in which the processor is configured to: determine a priority order between the uplink transmission and the downlink transmission in response to the collision between the uplink transmission and the downlink transmission; and perform the uplink transmission or receive the downlink transmission from a base station, according to the priority order.

According to another aspect, a device for handling a collision between uplink transmission and downlink transmission is provided in embodiments of the disclosure. The device includes: a processor; and a memory for storing instructions executable by the processor; in which the processor is configured to: transmit transmission indication information to a terminal that employs a half-duplex frequency division multiplexing manner for communication, in which the transmission indication information is configured to indicate a transmission behavior of the terminal in response to the collision between the uplink transmission and the downlink transmission.

According to another aspect, a non-transitory computer-readable storage medium is provided in embodiments of the disclosure. The non-transitory computer-readable storage medium has stored therein computer programs. When the computer programs are executed by a processor of a terminal, the processor is caused to perform actions in any method of the terminal side.

According to another aspect, a non-transitory computer-readable storage medium is provided in embodiments of the disclosure. The non-transitory computer-readable storage medium has stored therein computer programs. When the computer programs are executed by a processor of a base station, the processor is caused to perform actions in any method of the base station side.

The technical solutions provided in embodiments of the disclosure may have the following beneficial effects.

When the terminal has the collision between the uplink transmission and the downlink transmission, the priority order between the uplink transmission and the downlink transmission is determined, and the uplink transmission is performed or the downlink transmission is received from the base station, according to the priority order. For the terminal that employs the half-duplex frequency division multiplexing manner for communication, the collision between the uplink transmission and the downlink transmission is solved and the collision between the uplink transmission and the downlink transmission is avoided, which improves the communication quality.

### BRIEF DESCRIPTION OF THE DRAWINGS

In order to more clearly describe the technical solutions in embodiments of the disclosure, a brief description of drawings used in embodiments is given below. Obviously, the drawings in the following description are only part embodiments of the disclosure, and for those skilled in the art, other drawings can be obtained according to these drawings without creative labor.
FIG. 1 is a schematic diagram showing a network architecture according to some embodiments.
FIG. 2 is a flowchart showing a method for handling a collision between uplink transmission and downlink transmission according to some embodiments.
FIG. 3 is a flowchart showing another method for handling a collision between uplink transmission and downlink transmission according to some embodiments.
FIG. 4 is a flowchart showing another method for handling a collision between uplink transmission and downlink transmission according to some embodiments.
FIG. 5 is a block diagram showing an apparatus for handling a collision between uplink transmission and downlink transmission according to some embodiments.
FIG. 6 is a block diagram showing another apparatus for handling a collision between uplink transmission and downlink transmission according to some embodiments.
FIG. 7 is a block diagram of a terminal according to some embodiments.
FIG. 8 is a block diagram of a base station according to some embodiments.

### DETAILED DESCRIPTION

The following further describes embodiments of the disclosure in detail with reference to the drawings to make objectives, technical solutions and advantages of the disclosure clearer.

The network architecture and service scenarios described in embodiments of the disclosure are to explain technical solutions of embodiments of the disclosure more clearly, and do not constitute a limitation to technical solutions provided in embodiments of the disclosure. Those skilled in the art may know that technical solutions provided in embodiments of the disclosure are equally applicable to similar technical problems as the network architecture evolves and new service scenarios appear.

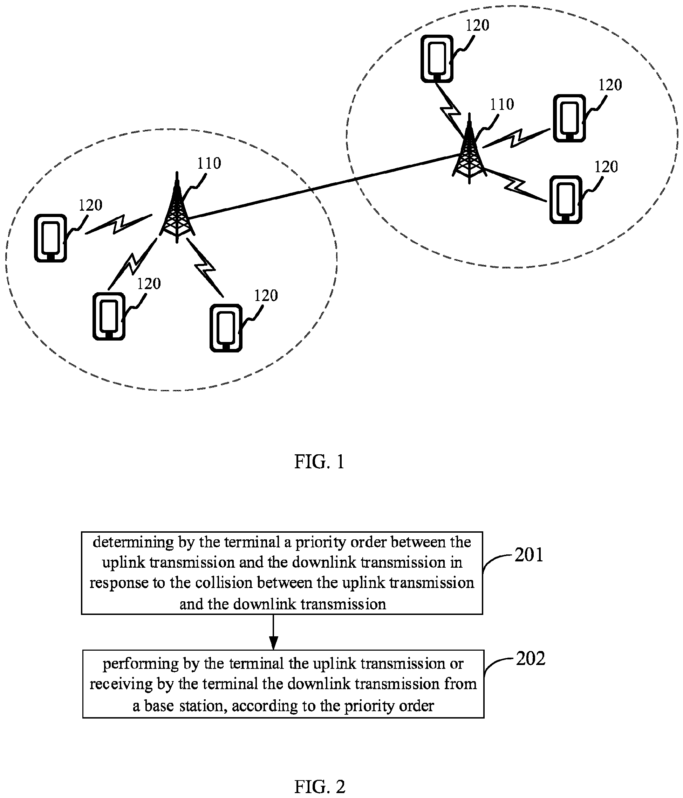

FIG. 1 is a schematic diagram showing a network architecture according to some embodiments. The network architecture includes base stations 110 and terminals 120.

The base station 110 can be deployed in an access network. The access network in a 5^{th}-generation mobile network or 5^{th}-generation wireless system (5G) new radio (NR) system may be called as new generation-radio access network (NG-RAN). The base station 110 and the terminal 120 may communicate with each other through a certain radio technology, such as a cellular technology.

The base station 110 may be an apparatus deployed in the access network and for providing a wireless communication function to the terminal 120. The base stations 120 may include various forms of macro base stations, micro base stations, relay stations, access points, and the like. In systems adopting different wireless access technologies, devices equipped with functions of base stations may have different names. For example, in the 5G NR system, it can be called as gNodeB or gNB. The name "base station" may change with the evolution of communication technologies. For the sake of easy description, in embodiments of the disclosure, the apparatus that provides the wireless communication function to the terminal 120 is collectively called as the base station.

There may be a plurality of terminals 120. One or more terminals 120 may be deployed in a cell governed by each base station 110. The terminals 120 may include handheld devices, on-board devices, wearable devices, and computing devices with the wireless communication function, or other processing devices connected to a wireless modem, as well as various forms of user equipment (UE), mobile station (MS), terminal devices, etc. For the sake of easy description, in embodiments of the disclosure, these devices are collectively called as the terminals.

The "5G NR system" in embodiments of the disclosure may also be called as a 5G system or a NR system, and those skilled in the art can understand its meaning. The technical solutions described in embodiments of the disclosure may be applicable to the 5G NR system, and may also be applicable to subsequent evolution systems of the 5G NR system and the 5G NR Internet of Vehicles.

FIG. 2 is a flowchart showing a method for handling a collision between uplink transmission and downlink transmission according to some embodiments. The method is applicable to a terminal that employs a half-duplex frequency division multiplexing manner for communication. The method includes the following.

In 201, the terminal determines a priority order between the uplink transmission and the downlink transmission in response to the collision between the uplink transmission and the downlink transmission.

For the terminal that employs the half-duplex frequency division multiplexing manner for communication, because it can only perform one operation, i.e., the uplink transmission or the downlink transmission, at the same time, there is the collision between the uplink transmission and the downlink transmission when the uplink transmission and the downlink transmission need to be performed at the same time. The collision between the uplink transmission and the downlink transmission refer to a collision that occurs when the uplink transmission and the downlink transmission are performed at the same time. Optionally, the collision between the uplink transmission and the downlink transmission includes the uplink transmission and the downlink transmission occupying a same time-domain unit; and/or a time interval between the uplink transmission and the downlink transmission, less than handover guard time. That is, when the uplink transmission and the downlink transmission occupy the same time-domain unit or the time interval between the uplink transmission and the downlink transmission is less than the handover guard time, it means that the terminal has the collision between the uplink transmission and the downlink transmission. The time-domain units can be defined as frames, subframes, time slots, time slot symbols or other time-domain units. The handover guard time is used for switching between uplink and downlink carriers and switching among bandwidth parts (BWPs). The handover guard time depends on terminal capabilities, and terminals of different capabilities may support different handover guard time. In addition, the handover guard time for switching from the uplink transmission to the downlink transmission may be the same as or different from the handover guard time for switching from the downlink transmission to the uplink transmission. Herein, it can be assumed that the handover guard time is 0, that is, the handover guard time is not required. At this time, the collision between the uplink transmission and the downlink transmission only include the uplink transmission and the downlink transmission occupying the same time-domain unit.

Optionally, the handover guard time is obtained through receiving by the terminal a downlink signaling from the base station. In an example, the base station directly configures the handover guard time, and then transmits the configured handover guard time to the terminal through the downlink signaling. In another example, the terminal transmits the minimum handover guard time supported by itself to the base station, and the base station configures the handover guard time for the terminal according to the minimum handover guard time, and then sends the configured handover guard time to the terminal through the downlink signaling. In this way, the handover guard time configured by the base station for the terminal is not less than the minimum handover guard time supported by the terminal.

The priority order between the uplink transmission and the downlink transmission refers to a priority between the uplink transmission and the downlink transmission. For example, a priority of the uplink transmission is higher than a priority of the downlink transmission or a priority of the downlink transmission is higher than a priority of the uplink transmission.

Optionally, determining the priority order includes at least one of the following.

The priority between the uplink transmission and the downlink transmission is determined based on transmission time. For example, transmission time of the uplink transmission and transmission time of the downlink transmission are obtained from scheduling information, and then the priority between the uplink transmission and the downlink transmission is determined based on the transmission time. Optionally, the priority of the transmission which starts first is higher. For example, when there is the collision between the uplink transmission and the downlink transmission, and the start time of the uplink transmission is earlier than the start time of the downlink transmission, the priority of the uplink transmission is higher than the priority of the downlink transmission at this time. For another example, when there is the collision between the uplink transmission and the downlink transmission, and the start time of the downlink transmission is earlier than the start time of the uplink transmission, the priority of the downlink transmission is higher than the priority of the uplink transmission at this time.

The priority between the uplink transmission and the downlink transmission is determined based on priority information of transmission channels. For example, the priority information of the transmission channels is obtained from a high-level signaling (such as media access control (MAC) signaling), and then the priority between the uplink transmission and the downlink transmission is determined based on the priority information of the transmission channels. Optionally, the priority of transmitting, monitoring or receiving of the control channel is higher than the priority of transmitting and receiving of the shared channel.

The priority between the uplink transmission and the downlink transmission is determined based on types of transmission information. Optionally, the priority of transmitting a physical uplink control channel (PUCCH) or a physical uplink shared channel (PUSCH) that includes hybrid automatic repeat request (HARQ) feedback information is higher than the priority of receiving downlink data.

The priority between the uplink transmission and the downlink transmission is determined based on resource allocation manners. Optionally, the priority of uplink or downlink transmission through downlink control information (DCI) dynamic resource allocation is higher than the priority of uplink or downlink transmission through radio resource control (RRC) signaling semi-statically allocation.

In some embodiments, it is predefined or pre-configured that the priority of the uplink transmission is higher than the priority of the downlink transmission, or the priority of the downlink transmission is higher than the priority of the uplink transmission. When there is the collision between the uplink transmission and the downlink transmission, the terminal determines the priority order between the uplink transmission and the downlink transmission according to the foregoing predefined or pre-configured content. For example, if it is predefined or pre-configured that the priority of the uplink transmission is higher than the priority of the downlink transmission, when there is the collision between the uplink transmission and the downlink transmission, the terminal determines that the priority of the uplink transmission is higher than the priority of the downlink transmission, and the terminal performs the uplink transmission first. In this case, the terminal does not need to obtain the above information such as transmission time, priority information of transmission channels, types of transmission information, resource allocation manners, and the terminal can directly determine the priority order between the uplink transmission and the downlink transmission.

In 202, the terminal performs the uplink transmission or receives the downlink transmission from the base station, according to the priority order.

When the priority of the uplink transmission is higher than the priority of the downlink transmission, the terminal preferentially performs the uplink transmission. Optionally, after the uplink transmission is completed, the terminal receives the downlink transmission of the base station.

When the priority of the downlink transmission is higher than the priority of the uplink transmission, the terminal preferentially receives the downlink transmission of the base station. Optionally, after the downlink transmission is completed, the uplink transmission is performed.

In summary, in the technical solutions provided in embodiments of the disclosure, when the terminal has the collision between the uplink transmission and the downlink transmission, the priority order between the uplink transmission and the downlink transmission is determined, and the uplink transmission is performed or the downlink transmission is received from the base station, according to the priority order. For the terminal that employs the half-duplex frequency division multiplexing manner for communication, the collision between the uplink transmission and the downlink transmission is solved and the collision between the uplink transmission and the downlink transmission is avoided, which improves the communication quality.

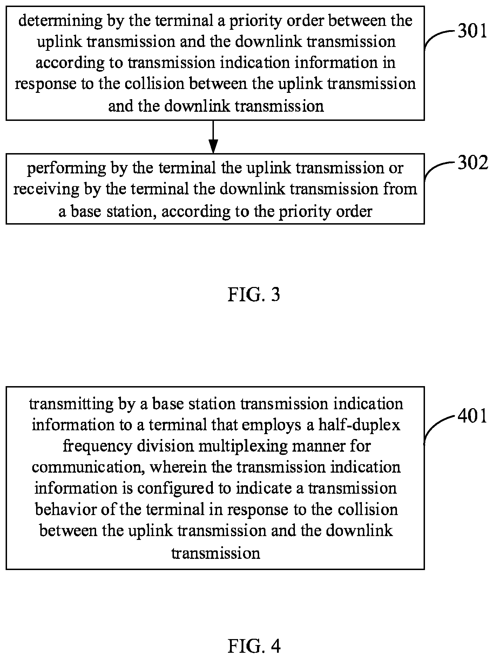

FIG. 3 is a flowchart showing another method for handling a collision between uplink transmission and downlink transmission according to some embodiments. The method is applicable to a terminal that employs a half-duplex frequency division multiplexing manner for communication. The method includes the following.

In 301, the terminal determines a priority order between the uplink transmission and the downlink transmission according to transmission indication information in response to the collision between the uplink transmission and the downlink transmission.

In 302, the terminal performs the uplink transmission or receives the downlink transmission from the base station according to the priority order.

For the terminal that employs the half-duplex frequency division multiplexing manner for communication, because it can only perform one operation, i.e., the uplink transmission or the downlink transmission, at the same time, there is the collision between the uplink transmission and the downlink transmission when the uplink transmission and the downlink transmission need to be performed at the same time. The collision between the uplink transmission and the downlink transmission refer to a collision that occurs when the uplink transmission and the downlink transmission are performed at the same time. Optionally, the collision between the uplink transmission and the downlink transmission includes the uplink transmission and the downlink transmission occupying a same time-domain unit; and/or a time interval between the uplink transmission and the downlink transmission, less than handover guard time. That is, when the uplink transmission and the downlink transmission occupy the same time-domain unit or the time interval between the uplink transmission and the downlink transmission is less than the handover guard time, it means that the terminal has the collision between the uplink transmission and the downlink transmission. The time-domain units can be defined as frames, subframes, time slots, time slot symbols, or other time-domain units. The handover guard time is used for switching between uplink and downlink carriers and switching among BWPs. The handover guard time depends on terminal capabilities, and terminals of different capabilities may support different handover guard time. In addition, the handover guard time for switching from the uplink transmission to the downlink transmission may be the same as or different from the handover guard time for switching from the downlink transmission to the uplink transmission. Herein, it can be assumed that the handover guard time is 0, that is, the handover guard time is not required. At this time, the collision between the uplink transmission and the downlink transmission only include that the uplink transmission and the downlink transmission occupying the same time-domain unit.

In some embodiments of the disclosure, the transmission indication information is configured to indicate a transmission behavior of the terminal in response to the collision between the uplink transmission and the downlink transmission. For example, the transmission indication information may be configured to instruct the terminal to perform the uplink transmission in response to the collision between the uplink transmission and the downlink transmission or the transmission indication information may be configured to instruct the terminal to perform the downlink transmission in response to the collision between the uplink transmission and the downlink transmission. In a possible implementation manner, the transmission indication information may also be configured to indicate that the terminal neither performs the uplink transmission nor the downlink transmission in response to the collision between the uplink transmission and the downlink transmission.

In an example, the transmission indication information may be obtained by receiving a downlink signaling from the base station. In this case, the base station may preconfigure the transmission indication information, and then transmit the preconfigured transmission indication information to the terminal through the downlink signaling. The downlink signaling can be transmitted in a unicast form, and can also be transmitted in a multicast or broadcast form, which is not limited in embodiments of the disclosure. In addition, embodiments of the disclosure also may not limit an indication manner of the transmission indication information in the downlink signaling. The base station configures the behavior of the half-duplex terminal in the FDD system when there is the collision between the uplink transmission and the downlink transmission for the terminal, and the terminal operates according to the configuration of the base station. That is, the base station configures the transmission indication information and transmits the transmission indication information to the terminal through the downlink signaling. When there is the collision between the uplink transmission and the downlink transmission, the terminal performs the uplink transmission or the downlink transmission according to the transmission indication information.

In another example, the transmission indication information may be predefined by the protocol. The protocol predefines the behavior of the terminal when there is the collision between the uplink transmission and the downlink transmission, and the terminal stores the predefined transmission indication information.

In an example, the transmission indication information includes priority information, and the priority information is configured to indicate a priority between the uplink transmission and the downlink transmission. It should be noted that the higher the priority, the corresponding transmission is performed preferentially, and the lower the priority, the corresponding transmission is not performed preferentially. For example, the priority of the uplink transmission is higher than the priority of the downlink transmission, which means that when there is the collision between the uplink transmission and the downlink transmission, the uplink transmission is performed preferentially.

Optionally, the priority information includes: first priority information configured to indicate that a priority of the uplink transmission is higher than a priority of the downlink transmission; or, second priority information configured to indicate that a priority of the downlink transmission is higher than a priority of the uplink transmission. At this time, the logic of the transmission indication information is simple, which helps to reduce the complexity of the behavior of the terminal side.

Optionally, the priority information includes at least one of the following.

Priority information based on transmission time is configured to indicate start time of the uplink transmission and start time of the downlink transmission to determine the priority between the uplink transmission and the downlink transmission. Exemplarily, the priority information based on the transmission time may indicate that the priority to start the transmission first is higher, that is, the priority with the earlier start time is higher. For example, when there is the collision between the uplink transmission and the downlink transmission, and the start time of the uplink transmission is earlier than the start time of the downlink transmission, the priority of the uplink transmission is higher than the priority of the downlink transmission at this time, and the terminal can perform the uplink transmission first. For another example, when there is the collision between the uplink transmission and the downlink transmission, and the start time of the downlink transmission is earlier than the start time of the uplink transmission, the priority of the downlink transmission is higher than the priority of the uplink transmission at this time, and the terminal can perform the downlink transmission first.

Priority information based on transmission channels is configured to indicate a physical channel for the uplink transmission and a physical channel for the downlink transmission to determine the priority between the uplink transmission and the downlink transmission. Optionally, the priority information based on the transmission channels may be configured to indicate the priority of transmitting, monitoring or receiving of the control channel is higher than the priority of transmitting and receiving of the shared channel. Optionally, the priority information based on the transmission channels can be configured to indicate that the priority of transmitting a physical random access channel (PRACH) is higher than the priority of transmitting and receiving of other channels, and it can also be configured to indicate that the priority of the PUCCH is high than the priority for the PUSCH. The foregoing description is only an example. In other possible implementations, the priority information based on the transmission channels may also be configured to indicate the priority between other uplink physical channels, which is not limited in embodiments of the disclosure. In addition, the priority information based on the transmission channels can also be characterized by the signal transmitted on the physical channel. For example, the priority of the DCI signaling is higher than the priority of uplink data, which means that the priority of the PDCCH is higher than that of the PUSCH.

Priority information based on types of transmission information is configured to indicate an information type of the uplink transmission and an information type of the downlink transmission to determine the priority between the uplink transmission and the downlink transmission. Optionally, the priority information based on the types of transmission information is configured to indicate the priority of transmitting the PUCCH or PUSCH including HARQ feedback information is higher than the priority of receiving downlink data. Of course, in other possible implementation manners, the priority information based on the types of transmission information may also be configured to indicate the priority among other types of transmission information, which is not limited in embodiments of the disclosure.

Priority information based on resource allocation manners is configured to indicate a resource allocation manner of the uplink transmission and a resource allocation manner of the downlink transmission to determine the priority between the uplink transmission and the downlink transmission. Optionally, the priority information based on the resource allocation manners can be configured to indicate the priority of uplink or downlink transmission through the DCI dynamic resource allocation is higher than the priority of uplink or downlink transmission through the RRC signaling semi-statically allocation. For example, the priority information based on the resource allocation manner can also be configured to indicate that, the priority of transmitting a physical downlink shared channel (PDSCH) that is dynamically scheduled by the DCI, which is higher than the priority of transmitting the PUSCH or PUCCH that is semi-statically scheduled through the RRC signaling; the priority of transmitting the PUSCH or PUCCH that is dynamically scheduled by the DCI, which is higher than the priority of monitoring a physical downlink control channel (PDCCH) and transmitting the PDSCH that are semi-statically scheduled through the RRC signaling. The scheduling on the base station side ensures that the PDSCH transmission of the DCI dynamic scheduling and the PUSCH transmission of the DCI dynamic scheduling will not conflict with each other.

In another example, the transmission indication information includes duration allocation information, and the duration allocation information is configured to indicate a duration during which the uplink transmission is prioritized and a duration during which the downlink transmission is prioritized. Optionally, the duration allocation information includes the duration during which the uplink transmission is prioritized and/or the duration during which the downlink transmission is prioritized. Optionally, the duration allocation information further includes a duration that is neither the duration during which the uplink transmission is prioritized nor the duration during which the downlink transmission is prioritized.

When the transmission indication information includes the duration allocation information, it is better to use the base station to configure the duration allocation information and then transmit the duration allocation information to the terminal. The base station can configure the duration allocation according to actual conditions of terminals in its cell. For example, the base station may transmit the duration allocation information to the terminal through downlink control information such as the RRC signaling or the DCI signaling. Optionally, the duration during which the uplink transmission is prioritized and the duration during which the downlink transmission is prioritized are periodic. The specific period can be configured by the base station to the terminal, and the specific duration in each period can be allocated to the terminal through manners such as bitmaps and predefined tables. The duration can be defined according to any of following time-domain units: frame, subframe, time slot or OFDM symbol.

Exemplarily, during the duration during which the uplink transmission is prioritized, a priority of the uplink transmission is higher than a priority of the downlink transmission; and during the duration during which the downlink transmission is prioritized, a priority of the downlink transmission is higher than a priority of the uplink transmission. When a duration during which there is the collision between the uplink transmission and the downlink transmission, is within the duration during which the uplink transmission is prioritized, the terminal will give priority to the uplink transmission; and when a duration during which there is the collision between the uplink transmission and the downlink transmission, is within the duration during which the downlink transmission is prioritized, the terminal will give priority to the downlink transmission. When there is no collision between the uplink transmission and the downlink transmission, the terminal can perform the downlink transmission within the duration during which the uplink transmission is prioritized, or perform the uplink transmission within the duration during which the downlink transmission is prioritized. For example, for the collision between the PDCCH monitoring operation and the semi-statically scheduled uplink data transmission, if the collision occurs within the duration during which the uplink transmission is prioritized, the terminal chooses to transmit the uplink data; and if the collision occurs within the duration during which the downlink transmission is prioritized, the terminal chooses to perform the downlink PDCCH monitoring.

Exemplarily, during the duration during which the uplink transmission is prioritized, a priority between the uplink transmission and the downlink transmission is determined based on a first rule; and during the duration during which the downlink transmission is prioritized, a priority between the uplink transmission and the downlink transmission is determined based on a second rule. The first rule is more inclined to the uplink transmission, and the second rule is more inclined to the downlink transmission. That is, the probability that the uplink transmission is preferential, which is determined based on the first rule, is higher than the probability that the uplink transmission is preferential, which is determined based on the second rule, and the probability that the downlink transmission is preferential, which is determined based on the second rule, is higher than the probability that the downlink transmission is preferential, which is determined based on the first rule. The first rule and the second rule may be pre-defined by the protocol, or may be pre-configured by the base station and transmitted to the terminal, which is not limited in embodiments of the disclosure.

Exemplarily, in response to a first part of a duration of the collision between the uplink transmission and the downlink transmission being in the duration during which the uplink transmission is prioritized, and a second part of the duration of the collision between the uplink transmission and the downlink transmission being in the duration during which the downlink transmission is prioritized, in a possible implementation manner, during the duration of the collision between the uplink transmission and the downlink transmission, it is pre-defined or pre-configured that transmission is performed according to the priority order determined in the first part or transmission is performed according to the priority order determined in the second part. For example, if it is pre-defined that the transmission is performed according to the priority order determined in the first part, and the first part is within the duration during which the uplink transmission is prioritized, the terminal will give priority to the uplink transmission during the entire duration when there is the collision between the uplink transmission and the downlink transmission.

In another possible implementation manner, during the duration of the collision between the uplink transmission and the downlink transmission, it is pre-defined or pre-configured that the uplink transmission is performed preferentially or the downlink transmission is performed preferentially. For example, if it is pre-configured to perform the downlink transmission preferentially during the duration of the collision between the uplink transmission and the downlink transmission, the terminal will give priority to the downlink transmission during the entire duration of the collision between the uplink transmission and the downlink transmission.

It should be noted that the foregoing description is only given with two priority levels of uplink transmission prioritized and downlink transmission prioritized, but it does not rule out that there may be other priority orders and other durations. For example, there is a priority order that is neither the uplink transmission prioritized nor the downlink transmission prioritized, or there are other durations that are neither the duration during which the uplink transmission is prioritized nor the duration during which the downlink transmission is prioritized. When the collision between the uplink transmission and the downlink transmission is within the other durations mentioned above, it can be pre-defined or pre-configured to transmit according to the uplink transmission prioritized, or to transmit according to the downlink transmission prioritized; it is also possible to determine the priority between the uplink transmission and the downlink transmission based on the third rule; and it is also possible to perform neither uplink transmission nor downlink transmission, which is not limited in embodiments of the disclosure.

Exemplarily, the base station configuration that the period is 14 time-domain units, which can be configured through an array with a length of 14, and the n^{th} element in the array represents the state of the n^{th} time-domain unit in the period. Three states can be defined: uplink transmission prioritized, downlink transmission prioritized, neither uplink transmission prioritized nor downlink transmission prioritized; or a variety of pre-defined duration arrangements of uplink transmission prioritized and downlink transmission prioritized, and different arrangements are given different sequence numbers, and the terminal only needs to be told the sequence number when configuring, and the terminal can correspondingly know which time-domain unit is the uplink transmission prioritized or the downlink transmission prioritized. As shown in Table-1 below, the period is 14 OFDM time-domain symbols, D represents the duration during which the downlink transmission is prioritized, U represents the duration during which the uplink transmission is prioritized, and X represents other durations that are neither the duration during which the uplink transmission is prioritized nor the duration during which the downlink transmission is prioritized.

Examples of Table-1 are as follows:

**Table 1**

| numbers | S1 | S2 | S3 | S4 | S5 | S6 | S7 | S8 | S9 | S10 | S11 | S12 | S13 | S14 |
|---|---|---|---|---|---|---|---|---|---|---|---|---|---|---|
| 1 | D | D | X | X | U | U | U | U | U | U | U | U | U | U |
| 2 | D | D | D | X | X | U | U | U | U | U | U | U | U | U |
| ...... | | | | | | | | | | | | | | |

In summary, in the technical solutions provided in embodiments of the disclosure, when the terminal has the collision between the uplink transmission and the downlink transmission, the priority order between the uplink transmission and the downlink transmission is determined according to the transmission indication information, and the uplink transmission is performed or the downlink transmission is received from the base station, according to the priority order, in which the transmission indication information is configured to indicate the transmission behavior of the terminal in response to the collision between the uplink transmission and the downlink transmission. For the terminal that employs the half-duplex frequency division multiplexing manner for communication, the collision between the uplink transmission and the downlink transmission is solved and the collision between the uplink transmission and the downlink transmission is avoided, which improves the communication quality.

In addition, the disclosure provides two types of transmission indication information. One type of transmission indication information includes the priority information that is configured to indicate the priority between the uplink transmission and the downlink transmission; and the other type of transmission indication information includes the duration allocation information that is configured to indicate the duration during which the uplink transmission is prioritized and the duration during which the downlink transmission is prioritized. The technical solutions of the disclosure provide two types of transmission indication information, which improves the diversity and flexibility of the solutions.

In addition, the transmission indication information in the disclosure can be pre-defined by the protocol, or pre-configured on the base station side. There is no need for the base station to schedule the uplink transmission and the downlink transmission to different time-domain units in real time. Therefore, compared to the base station scheduling, the technical solutions of the disclosure can reduce the complexity of the base station side.

FIG. 4 is a flowchart showing another method for handling a collision between uplink transmission and downlink transmission according to some embodiments. The method can be applicable to the base station. The method may include the following.

In 401, the base station transmits transmission indication information to a terminal that employs a half-duplex frequency division multiplexing manner for communication, in which the transmission indication information is configured to indicate a transmission behavior of the terminal in response to the collision between the uplink transmission and the downlink transmission.

Optionally, the transmission indication information includes priority information, and the priority information is configured to indicate a priority between the uplink transmission and the downlink transmission.

Optionally, the priority information includes: first priority information configured to indicate that a priority of the uplink transmission is higher than a priority of the downlink transmission; or, second priority information configured to indicate that a priority of the downlink transmission is higher than a priority of the uplink transmission.

Optionally, the priority information includes at least one of: priority information based on transmission time, configured to indicate start time of the uplink transmission and start time of the downlink transmission to determine the priority between the uplink transmission and the downlink transmission; priority information based on transmission channels, configured to indicate a physical channel for the uplink transmission and a physical channel for the downlink transmission to determine the priority between the uplink transmission and the downlink transmission; priority information based on types of transmission information, configured to indicate an information type of the uplink transmission and an information type of the downlink transmission to determine the priority between the uplink transmission and the downlink transmission; or priority information based on resource allocation manners, configured to indicate a resource allocation manner of the uplink transmission and a resource allocation manner of the downlink transmission to determine the priority between the uplink transmission and the downlink transmission.

Optionally, the transmission indication information includes duration allocation information, and the duration allocation information is configured to indicate a duration during which the uplink transmission is prioritized and a duration during which the downlink transmission is prioritized.

Optionally, during the duration during which the uplink transmission is prioritized, a priority of the uplink transmission is higher than a priority of the downlink transmission; and during the duration during which the downlink transmission is prioritized, a priority of the downlink transmission is higher than a priority of the uplink transmission.

Optionally, during the duration during which the uplink transmission is prioritized, a priority between the uplink transmission and the downlink transmission is determined based on a first rule; and during the duration during which the downlink transmission is prioritized, a priority between the uplink transmission and the downlink transmission is determined based on a second rule.

Optionally, the duration during which the uplink transmission is prioritized and the duration during which the downlink transmission is prioritized are periodic.

Optionally, the duration is defined according to any of following time-domain units: frame, subframe, time slot or OFDM symbol.

Optionally, in response to a first part of a duration of the collision between the uplink transmission and the downlink transmission being in the duration during which the uplink transmission is prioritized, and a second part of the duration of the collision between the uplink transmission and the downlink transmission being in the duration during which the downlink transmission is prioritized: during the duration of the collision between the uplink transmission and the downlink transmission, it is pre-defined or pre-configured that transmission is performed according to the priority order determined in the first part or transmission is performed according to the priority order determined in the second part; or, during the duration of the collision between the uplink transmission and the downlink transmission, it is pre-defined or pre-configured that the uplink transmission is performed preferentially or the downlink transmission is performed preferentially.

Optionally, the collision between the uplink transmission and the downlink transmission includes: the uplink transmission and the downlink transmission occupying a same time-domain unit; and/or, a time interval between the uplink transmission and the downlink transmission, less than handover guard time.

For the introduction on the base station side, reference should be made to the introduction on the terminal side, which will not be repeated herein.

In summary, in the technical solutions provided in embodiments of the disclosure, the base station transmits the transmission indication information to the terminal that employs the half-duplex frequency division multiplexing manner for communication. The transmission indication information is configured to indicate the transmission behavior of the terminal in response to the collision between the uplink transmission and the downlink transmission. For the terminal that employs the half-duplex frequency division multiplexing manner for communication, the collision between the uplink transmission and the downlink transmission is solved and the collision between the uplink transmission and the downlink transmission is avoided, which improves the communication quality.

In addition, the disclosure provides two types of transmission indication information. One type of transmission indication information includes the priority information that is configured to indicate the priority between the uplink transmission and the downlink transmission; and the other type of transmission indication information includes the duration allocation information that is configured to indicate the duration during which the uplink transmission is prioritized and the duration during which the downlink transmission is prioritized. The technical solutions of the disclosure provide two types of transmission indication information, which improves the diversity and flexibility of the solutions.

In addition, the transmission indication information in the disclosure can be pre-configured on the base station side. There is no need for the base station to schedule the uplink transmission and the downlink transmission to different time-domain units in real time. Therefore, compared to the base station scheduling, the technical solutions of the disclosure can reduce the complexity of the base station side.

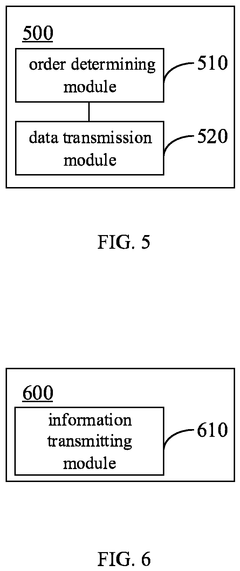

FIG. 5 is a block diagram showing an apparatus for handling a collision between uplink transmission and downlink transmission according to some embodiments. The apparatus has the function of realizing the above-mentioned method example on the terminal side, and the function can be realized by hardware or by hardware executing corresponding software. The apparatus can be the terminal described above, or can be set in the terminal. The apparatus 500 may include an order determining module 510 and a data transmission module 520.

The order determining module 510 is configured to determine a priority order between the uplink transmission and the downlink transmission in response to the collision between the uplink transmission and the downlink transmission.

The data transmission module 520 is configured to perform the uplink transmission or receive the downlink transmission from a base station, according to the priority order.

In summary, in the technical solutions provided in embodiments of the disclosure, when the terminal has the collision between the uplink transmission and the downlink transmission, the priority order between the uplink transmission and the downlink transmission is determined, and the uplink transmission is performed or the downlink transmission is received from the base station, according to the priority order. For the terminal that employs the half-duplex frequency division multiplexing manner for communication, the collision between the uplink transmission and the downlink transmission is solved and the collision between the uplink transmission and the downlink transmission is avoided, which improves the communication quality.

Optionally, determining the priority order includes at least one of: determining a priority between the uplink transmission and the downlink transmission based on transmission time; determining a priority between the uplink transmission and the downlink transmission based on priority information of transmission channels; determining a priority between the uplink transmission and the downlink transmission based on types of transmission information; or determining a priority between the uplink transmission and the downlink transmission based on resource allocation manners.

Optionally, the order determining module 510 is configured to determine the priority order between the uplink transmission and the downlink transmission according to transmission indication information, in which the transmission indication information is configured to indicate a transmission behavior of the terminal in response to the collision between the uplink transmission and the downlink transmission.

Optionally, the transmission indication information includes priority information, and the priority information is configured to indicate a priority between the uplink transmission and the downlink transmission.

Optionally, the priority information includes: first priority information configured to indicate that a priority of the uplink transmission is higher than a priority of the downlink transmission; or, second priority information configured to indicate that a priority of the downlink transmission is higher than a priority of the uplink transmission.

Optionally, the transmission indication information includes duration allocation information, and the duration allocation information is configured to indicate a duration during which the uplink transmission is prioritized and a duration during which the downlink transmission is prioritized.

Optionally, during the duration during which the uplink transmission is prioritized, a priority of the uplink transmission is higher than a priority of the downlink transmission; and during the duration during which the downlink transmission is prioritized, a priority of the downlink transmission is higher than a priority of the uplink transmission.

Optionally, during the duration during which the uplink transmission is prioritized, a priority between the uplink transmission and the downlink transmission is determined based on a first rule; and during the duration during which the downlink transmission is prioritized, a priority between the uplink transmission and the downlink transmission is determined based on a second rule.

Optionally, the duration during which the uplink transmission is prioritized and the duration during which the downlink transmission is prioritized are periodic.

Optionally, the duration is defined according to any of following time-domain units: frame, subframe, time slot or OFDM symbol.

Optionally, in response to a first part of a duration of the collision between the uplink transmission and the downlink transmission being in the duration during which the uplink transmission is prioritized, and a second part of the duration of the collision between the uplink transmission and the downlink transmission being in the duration during which the downlink transmission is prioritized: during the duration of the collision between the uplink transmission and the downlink transmission, it is pre-defined or pre-configured that transmission is performed according to the priority order determined in the first part or transmission is performed according to the priority order determined in the second part; or, during the duration of the collision between the uplink transmission and the downlink transmission, it is pre-defined or pre-configured that the uplink transmission is performed preferentially or the downlink transmission is performed preferentially.

Optionally, the transmission indication information is obtained by receiving a downlink signaling from the base station; or, the transmission indication information is predefined by a protocol.

Optionally, the collision between the uplink transmission and the downlink transmission includes: the uplink transmission and the downlink transmission occupying a same time-domain unit; and/or, a time interval between the uplink transmission and the downlink transmission, less than handover guard time.

Optionally, the handover guard time is obtained by receiving a downlink signaling from the base station.

FIG. 6 is a block diagram showing another apparatus for handling a collision between uplink transmission and downlink transmission according to some embodiments. The apparatus has the function of realizing the above-mentioned method example on the base station side, and the function can be realized by hardware or by hardware executing corresponding software. The apparatus can be the base station described above, or can be set in the base station. The apparatus 600 includes an information transmitting module 610.

The information transmitting module 610 is configured to transmit transmission indication information to a terminal that employs a half-duplex frequency division multiplexing manner for communication, in which the transmission indication information is configured to indicate a transmission behavior of the terminal in response to the collision between the uplink transmission and the downlink transmission.

In summary, in the technical solutions provided in embodiments of the disclosure, the base station transmits the transmission indication information to the terminal that employs the half-duplex frequency division multiplexing manner for communication. The transmission indication information is configured to indicate the transmission behavior of the terminal in response to the collision between the uplink transmission and the downlink transmission. For the terminal that employs the half-duplex frequency division multiplexing manner for communication, the collision between the uplink transmission and the downlink transmission is solved and the collision between the uplink transmission and the downlink transmission is avoided, which improves the communication quality.

Optionally, the transmission indication information includes priority information, and the priority information is configured to indicate a priority between the uplink transmission and the downlink transmission.

Optionally, the priority information includes: first priority information configured to indicate that a priority of the uplink transmission is higher than a priority of the downlink transmission; or, second priority information configured to indicate that a priority of the downlink transmission is higher than a priority of the uplink transmission.

Optionally, the priority information includes at least one of: priority information based on transmission time, configured to indicate start time of the uplink transmission and start time of the downlink transmission to determine the priority between the uplink transmission and the downlink transmission; priority information based on transmission channels, configured to indicate a physical channel for the uplink transmission and a physical channel for the downlink transmission to determine the priority between the uplink transmission and the downlink transmission; priority information based on types of transmission information, configured to indicate an information type of the uplink transmission and an information type of the downlink transmission to determine the priority between the uplink transmission and the downlink transmission; or priority information based on resource allocation manners, configured to indicate a resource allocation manner of the uplink transmission and a resource allocation manner of the downlink transmission to determine the priority between the uplink transmission and the downlink transmission.

Optionally, the transmission indication information includes duration allocation information, and the duration allocation information is configured to indicate a duration during which the uplink transmission is prioritized and a duration during which the downlink transmission is prioritized.

Optionally, during the duration during which the uplink transmission is prioritized, a priority of the uplink transmission is higher than a priority of the downlink transmission; and during the duration during which the downlink transmission is prioritized, a priority of the downlink transmission is higher than a priority of the uplink transmission.

Optionally, during the duration during which the uplink transmission is prioritized, a priority between the uplink transmission and the downlink transmission is determined based on a first rule; and during the duration during which the downlink transmission is prioritized, a priority between the uplink transmission and the downlink transmission is determined based on a second rule.

Optionally, the duration during which the uplink transmission is prioritized and the duration during which the downlink transmission is prioritized are periodic.

Optionally, the duration is defined according to any of following time-domain units: frame, subframe, time slot or OFDM symbol.

Optionally, in response to a first part of a duration of the collision between the uplink transmission and the downlink transmission being in the duration during which the uplink transmission is prioritized, and a second part of the duration of the collision between the uplink transmission and the downlink transmission being in the duration during which the downlink transmission is prioritized: during the duration of the collision between the uplink transmission and the downlink transmission, it is pre-defined or pre-configured that transmission is performed according to the priority order determined in the first part or transmission is performed according to the priority order determined in the second part; or, during the duration of the collision between the uplink transmission and the downlink transmission, it is pre-defined or pre-configured that the uplink transmission is performed preferentially or the downlink transmission is performed preferentially.

Optionally, the collision between the uplink transmission and the downlink transmission includes: the uplink transmission and the downlink transmission occupying a same time-domain unit; and/or, a time interval between the uplink transmission and the downlink transmission, less than handover guard time.

Some embodiments of the disclosure also provide a device for handling a collision between uplink transmission and downlink transmission, which can implement the method provided by the disclosure. The device can be the terminal described above, or can be set in the terminal. The device includes: a processor; and a memory for storing executable instructions of the processor. The processor is configured to: determine a priority order between the uplink transmission and the downlink transmission in response to the collision between the uplink transmission and the downlink transmission; and perform the uplink transmission or receive the downlink transmission from a base station, according to the priority order.

Optionally, determining the priority order includes at least one of: determining a priority between the uplink transmission and the downlink transmission based on transmission time; determining a priority between the uplink transmission and the downlink transmission based on priority information of transmission channels; determining a priority between the uplink transmission and the downlink transmission based on types of transmission information; or determining a priority between the uplink transmission and the downlink transmission based on resource allocation manners.

Optionally, determining by the terminal the priority order between the uplink transmission and the downlink transmission includes: determining by the terminal the priority order between the uplink transmission and the downlink transmission according to transmission indication information, in which the transmission indication information is configured to indicate a transmission behavior of the terminal in response to the collision between the uplink transmission and the downlink transmission.

Optionally, the transmission indication information includes priority information, and the priority information is configured to indicate a priority between the uplink transmission and the downlink transmission.

Optionally, the priority information includes: first priority information configured to indicate that a priority of the uplink transmission is higher than a priority of the downlink transmission; or, second priority information configured to indicate that a priority of the downlink transmission is higher than a priority of the uplink transmission.

Optionally, the transmission indication information includes duration allocation information, and the duration allocation information is configured to indicate a duration during which the uplink transmission is prioritized and a duration during which the downlink transmission is prioritized.

Optionally, during the duration during which the uplink transmission is prioritized, a priority of the uplink transmission is higher than a priority of the downlink transmission; and during the duration during which the downlink transmission is prioritized, a priority of the downlink transmission is higher than a priority of the uplink transmission.

Optionally, during the duration during which the uplink transmission is prioritized, a priority between the uplink transmission and the downlink transmission is determined based on a first rule; and during the duration during which the downlink transmission is prioritized, a priority between the uplink transmission and the downlink transmission is determined based on a second rule.

Optionally, the duration during which the uplink transmission is prioritized and the duration during which the downlink transmission is prioritized are periodic.

Optionally, the duration is defined according to any of following time-domain units: frame, subframe, time slot or OFDM symbol.

Optionally, in response to a first part of a duration of the collision between the uplink transmission and the downlink transmission being in the duration during which the uplink transmission is prioritized, and a second part of the duration of the collision between the uplink transmission and the downlink transmission being in the duration during which the downlink transmission is prioritized: during the duration of the collision between the uplink transmission and the downlink transmission, it is pre-defined or pre-configured that transmission is performed according to the priority order determined in the first part or transmission is performed according to the priority order determined in the second part; or, during the duration of the collision between the uplink transmission and the downlink transmission, it is pre-defined or pre-configured that the uplink transmission is performed preferentially or the downlink transmission is performed preferentially.

Optionally, the transmission indication information is obtained by receiving a downlink signaling from the base station; or, the transmission indication information is predefined by a protocol.

Optionally, the collision between the uplink transmission and the downlink transmission includes: the uplink transmission and the downlink transmission occupying a same time-domain unit; and/or, a time interval between the uplink transmission and the downlink transmission, less than handover guard time.

Optionally, the handover guard time is obtained by receiving a downlink signaling from the base station.

Some embodiments of the disclosure also provide a device for handling a collision between uplink transmission and downlink transmission, which can implement the method provided by the disclosure. The device can be the base station described above, or can be set in the base station. The device includes: a processor; and a memory for storing executable instructions of the processor. The processor is configured to: transmit transmission indication information to a terminal that employs a half-duplex frequency division multiplexing manner for communication, in which the transmission indication information is configured to indicate a transmission behavior of the terminal in response to the collision between the uplink transmission and the downlink transmission.

Optionally, the transmission indication information includes priority information, and the priority information is configured to indicate a priority between the uplink transmission and the downlink transmission.

Optionally, the priority information includes: first priority information configured to indicate that a priority of the uplink transmission is higher than a priority of the downlink transmission; or, second priority information configured to indicate that a priority of the downlink transmission is higher than a priority of the uplink transmission.

Optionally, the priority information includes at least one of: priority information based on transmission time, configured to indicate start time of the uplink transmission and start time of the downlink transmission to determine the priority between the uplink transmission and the downlink transmission; priority information based on transmission channels, configured to indicate a physical channel for the uplink transmission and a physical channel for the downlink transmission to determine the priority between the uplink transmission and the downlink transmission; priority information based on types of transmission information, configured to indicate an information type of the uplink transmission and an information type of the downlink transmission to determine the priority between the uplink transmission and the downlink transmission; or priority information based on resource allocation manners, configured to indicate a resource allocation manner of the uplink transmission and a resource allocation manner of the downlink transmission to determine the priority between the uplink transmission and the downlink transmission.

Optionally, the transmission indication information includes duration allocation information, and the duration allocation information is configured to indicate a duration during which the uplink transmission is prioritized and a duration during which the downlink transmission is prioritized.

Optionally, during the duration during which the uplink transmission is prioritized, a priority of the uplink transmission is higher than a priority of the downlink transmission; and during the duration during which the downlink transmission is prioritized, a priority of the downlink transmission is higher than a priority of the uplink transmission.

Optionally, during the duration during which the uplink transmission is prioritized, a priority between the uplink transmission and the downlink transmission is determined based on a first rule; and during the duration during which the downlink transmission is prioritized, a priority between the uplink transmission and the downlink transmission is determined based on a second rule.

Optionally, the duration during which the uplink transmission is prioritized and the duration during which the downlink transmission is prioritized are periodic.

Optionally, the duration is defined according to any of following time-domain units: frame, subframe, time slot or OFDM symbol.

Optionally, in response to a first part of a duration of the collision between the uplink transmission and the downlink transmission being in the duration during which the uplink transmission is prioritized, and a second part of the duration of the collision between the uplink transmission and the downlink transmission being in the duration during which the downlink transmission is prioritized: during the duration of the collision between the uplink transmission and the downlink transmission, it is pre-defined or pre-configured that transmission is performed according to the priority order determined in the first part or transmission is performed according to the priority order determined in the second part; or, during the duration of the collision between the uplink transmission and the downlink transmission, it is pre-defined or pre-configured that the uplink transmission is performed preferentially or the downlink transmission is performed preferentially.

Optionally, the collision between the uplink transmission and the downlink transmission includes: the uplink transmission and the downlink transmission occupying a same time-domain unit; and/or, a time interval between the uplink transmission and the downlink transmission, less than handover guard time.

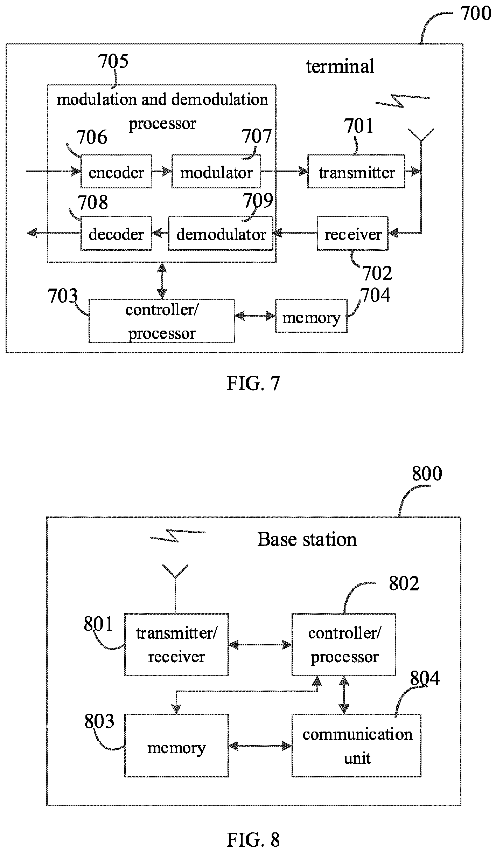

FIG. 7 is a block diagram illustrating a terminal, according to some embodiments.

The terminal 700 includes a transmitter 701, a receiver 702 and a processor 703. The processor 703 may be a controller. FIG. 7 illustrates "controller/processor 703". Optionally, the terminal 700 may further include a modulation and demodulation processor 705. The modulation and demodulation processor 705 may include an encoder 706, a modulator 707, a decoder 708, and a demodulator 709.

In an example, the transmitter 701 adjusts (e.g., analog conversion, filter, amplification, and up conversion) output samples and generates an uplink signal. The uplink signal is transmitted to the base station described in the above embodiments by an antenna. On the downlink, the antenna receives a downlink signal transmitted by the base station described in the above embodiments. The receiver 702 adjusts (e.g., filter, amplification, down conversion, and digitization) the signal received from the antenna and provides input samples. In the modulation and demodulation processor 705, the encoder 706 receives service data and signaling messages to be transmitted on the uplink, and processes the service data and signaling messages (e.g., formatting, encoding, and intertwining). The modulator 707 further processes (e.g., symbol mapping and modulation) the encoded service data and signaling messages and provides output samples. The demodulator 709 processes (e.g., demodulation) the input samples and provides symbol estimation. The decoder 708 processes (e.g., de-intertwining and decoding) the symbol estimation and provides decoded data and signaling messages transmitted to the terminal 700. The encoder 706, the modulator 707, the demodulator 709, and the decoder 708 may be implemented by a synthesized modulation and demodulation processor 705. These units are processed according to the wireless access technology adopted by the wireless access network (e.g., the long term evolution (LTE) and access technologies of other evolved systems). It should be noted that when the terminal 700 does not include the processor 705, the above functions of the processor 705 may also be realized by the processor 703.

The processor 703 controls and manages the actions of the terminal 700, and is configured to execute the processing procedure performed by the terminal 700 in the above embodiments of the disclosure. For example, the processor 703 is further configured to execute each action of the terminal side in the above method embodiments, and/or other actions of the technical solutions described in the embodiments of the disclosure.

Further, the terminal 700 may also include a memory 704. The memory 704 is configured to store program codes and data for the terminal 700.

It should be understood that FIG. 7 only illustrates a simplified design of the terminal 700. In practical applications, the terminal 700 may include any number of transmitters, receivers, processors, modem processors, memories, and the like, and all terminals that can implement embodiments of the disclosure are within the protection scope of embodiments of the disclosure.

FIG. 8 is a block diagram illustrating a base station, according to some embodiments.

The base station 800 includes a transmitter/receiver 801 and a processor 802. The processor 802 may be a controller. FIG. 8 illustrates "controller/processor 803". The transmitter/receiver 801 is configured to support transmitting and receiving of information between the base station and the terminal in the foregoing embodiments, and support communication between the base station and other network entities. The processor 802 performs various functions for communicating with the terminal. On the uplink, an uplink signal from the terminal is received via an antenna, demodulated by the receiver 801 (for example, a high-frequency signal is demodulated into a baseband signal), and further processed by the processor 802 to restore service data and signaling messages transmitted by the terminal. On the downlink, service data and signaling messages are processed by the processor 802, and modulated by the transmitter 801 (for example, a baseband signal is modulated into a high-frequency signal) to generate a downlink signal, which is transmitted to the terminal via an antenna. It should be noted that the above-mentioned demodulation or modulation function may also be completed by the processor 802. For example, the processor 802 is further configured to execute various actions on the base station side in the foregoing method embodiments, and/or other actions of the technical solutions described in embodiments of the disclosure.

Further, the base station 800 may further include a memory 803. The memory 803 is configured to store program codes and data of the base station 800. In addition, the base station 800 may further include a communication unit 804. The communication unit 804 is configured to support the base station 800 to communicate with other network entities (for example, network devices in the core network). For example, in the 5G NR system, the communication unit 804 may be an NG-U interface, which is configured to support the base station 800 to communicate with a user plane function (UPF) entity; or, the communication unit 804 may also be an NG-C interface, which is configured to support the base station 800 to communicate with an access and mobility management function (AMF) entity.

It should be understood that FIG. 8 only illustrates a simplified design of the base station 800. In practical applications, the base station 800 may include any number of transmitters, receivers, processors, controllers, memories, communication units, and the like, and all base stations that can implement embodiments of the disclosure are within the protection scope of embodiments of the disclosure.

Embodiments of the disclosure also provide a non-transitory computer-readable storage medium, on which computer programs are stored, and when the computer programs are executed by the processor of the terminal, the method for handling a collision between uplink transmission and downlink transmission at the terminal side introduced above is implemented.

Embodiments of the disclosure also provide a non-transitory computer-readable storage medium, on which computer programs are stored, and when the computer programs are executed by the processor of the base station, the method for handling a collision between uplink transmission and downlink transmission at the base station introduced above is implemented.

It should be understood that "multiple or a plurality of' mentioned herein refers to two or more. "And/or" describes the associated relationship of associated objects, and indicates that there are three types of relationships, for example, A and/or B, which means: A exists alone, A and B exist at the same time, and B exists alone. The character "/" generally indicates that associated objects are in an "or" relationship.

Other embodiments of the disclosure will be apparent to those skilled in the art from consideration of the specification and practice of the invention disclosed here. This disclosure is intended to cover any variations, uses, or adaptations of the invention following the general principles thereof and including such departures from the disclosure as come within known or customary practice in the art. It is intended that the specification and examples be considered as exemplary only, with a true scope and spirit of the invention being indicated by the following claims.

It will be appreciated that the disclosure is not limited to the exact construction that has been described above and illustrated in the accompanying drawings and that various modifications and changes can be made without departing from the scope thereof. It is intended that the scope of the invention only be limited by the appended claims.

## Claims

1. A method for handling a collision between uplink transmission and downlink transmission, applicable to a terminal that employs a half-duplex frequency division multiplexing manner for communication, comprising:
determining by the terminal a priority order between the uplink transmission and the downlink transmission in response to the collision between the uplink transmission and the downlink transmission; and
performing by the terminal the uplink transmission or receiving by the terminal the downlink transmission from a base station, according to the priority order.

2. The method as claimed in claim 1, wherein determining the priority order comprises at least one of:
determining a priority between the uplink transmission and the downlink transmission based on transmission time;
determining a priority between the uplink transmission and the downlink transmission based on priority information of transmission channels;
determining a priority between the uplink transmission and the downlink transmission based on types of transmission information; or
determining a priority between the uplink transmission and the downlink transmission based on resource allocation manners.

3. The method as claimed in claim 1, wherein determining by the terminal the priority order between the uplink transmission and the downlink transmission comprises:
determining by the terminal the priority order between the uplink transmission and the downlink transmission according to transmission indication information, wherein the transmission indication information is configured to indicate a transmission behavior of the terminal in response to the collision between the uplink transmission and the downlink transmission.

4. The method as claimed in claim 3, wherein the transmission indication information comprises priority information, and the priority information is configured to indicate a priority between the uplink transmission and the downlink transmission.

5. The method as claimed in claim 4, wherein the priority information comprises:
first priority information configured to indicate that a priority of the uplink transmission is higher than a priority of the downlink transmission;
or,
second priority information configured to indicate that a priority of the downlink transmission is higher than a priority of the uplink transmission.

6. The method as claimed in claim 3, wherein the transmission indication information comprises duration allocation information, and the duration allocation information is configured to indicate a duration during which the uplink transmission is prioritized and a duration during which the downlink transmission is prioritized.

7. The method as claimed in claim 6, wherein,
during the duration during which the uplink transmission is prioritized, a priority of the uplink transmission is higher than a priority of the downlink transmission; and
during the duration during which the downlink transmission is prioritized, a priority of the downlink transmission is higher than a priority of the uplink transmission.

8. The method as claimed in claim 6, wherein,
during the duration during which the uplink transmission is prioritized, a priority between the uplink transmission and the downlink transmission is determined based on a first rule; and
during the duration during which the downlink transmission is prioritized, a priority between the uplink transmission and the downlink transmission is determined based on a second rule.

9. The method as claimed in claim 6, wherein, the duration during which the uplink transmission is prioritized and the duration during which the downlink transmission is prioritized are periodic.

10. The method as claimed in claim 6, wherein, the duration is defined according to any of following time-domain units: frame, subframe, time slot or orthogonal frequency division multiplexing (OFDM) symbol.

11. The method as claimed in claim 6, wherein in response to a first part of a duration of the collision between the uplink transmission and the downlink transmission being in the duration during which the uplink transmission is prioritized, and a second part of the duration of the collision between the uplink transmission and the downlink transmission being in the duration during which the downlink transmission is prioritized:
during the duration of the collision between the uplink transmission and the downlink transmission, it is pre-defined or pre-configured that transmission is performed according to the priority order determined in the first part or transmission is performed according to the priority order determined in the second part;
or,
during the duration of the collision between the uplink transmission and the downlink transmission, it is pre-defined or pre-configured that the uplink transmission is performed preferentially or the downlink transmission is performed preferentially.

12. The method as claimed in any one of claims 3 to 11, wherein,
the transmission indication information is obtained by receiving a downlink signaling from the base station;
or,
the transmission indication information is predefined by a protocol.

13. The method as claimed in any one of claims 1 to 12, wherein the collision between the uplink transmission and the downlink transmission comprises:
the uplink transmission and the downlink transmission occupying a same time-domain unit;
and/or,
a time interval between the uplink transmission and the downlink transmission, less than handover guard time.

14. The method as claimed in claim 13, wherein the handover guard time is obtained by receiving a downlink signaling from the base station.

15. A method for handling a collision between uplink transmission and downlink transmission, comprising:
transmitting by a base station transmission indication information to a terminal that employs a half-duplex frequency division multiplexing manner for communication, wherein the transmission indication information is configured to indicate a transmission behavior of the terminal in response to the collision between the uplink transmission and the downlink transmission.

16. The method as claimed in claim 15, wherein the transmission indication information comprises priority information, and the priority information is configured to indicate a priority between the uplink transmission and the downlink transmission.

17. The method as claimed in claim 16, wherein the priority information comprises:
first priority information configured to indicate that a priority of the uplink transmission is higher than a priority of the downlink transmission;
or,
second priority information configured to indicate that a priority of the downlink transmission is higher than a priority of the uplink transmission.

18. The method as claimed in claim 16, wherein the priority information comprises at least one of:
priority information based on transmission time, configured to indicate start time of the uplink transmission and start time of the downlink transmission to determine the priority between the uplink transmission and the downlink transmission;
priority information based on transmission channels, configured to indicate a physical channel for the uplink transmission and a physical channel for the downlink transmission to determine the priority between the uplink transmission and the downlink transmission;
priority information based on types of transmission information, configured to indicate an information type of the uplink transmission and an information type of the downlink transmission to determine the priority between the uplink transmission and the downlink transmission; or
priority information based on resource allocation manners, configured to indicate a resource allocation manner of the uplink transmission and a resource allocation manner of the downlink transmission to determine the priority between the uplink transmission and the downlink transmission.

19. The method as claimed in claim 15, wherein, the transmission indication information comprises duration allocation information, and the duration allocation information is configured to indicate a duration during which the uplink transmission is prioritized and a duration during which the downlink transmission is prioritized.

20. The method as claimed in claim 19, wherein,
during the duration during which the uplink transmission is prioritized, a priority of the uplink transmission is higher than a priority of the downlink transmission; and
during the duration during which the downlink transmission is prioritized, a priority of the downlink transmission is higher than a priority of the uplink transmission.

21. The method as claimed in claim 19, wherein,
during the duration during which the uplink transmission is prioritized, a priority between the uplink transmission and the downlink transmission is determined based on a first rule; and
during the duration during which the downlink transmission is prioritized, a priority between the uplink transmission and the downlink transmission is determined based on a second rule.

22. The method as claimed in claim 19, wherein, the duration during which the uplink transmission is prioritized and the duration during which the downlink transmission is prioritized are periodic.

23. The method as claimed in claim 19, wherein, the duration is defined according to any of following time-domain units: frame, subframe, time slot or orthogonal frequency division multiplexing (OFDM) symbol.

24. The method as claimed in claim 19, wherein in response to a first part of a duration of the collision between the uplink transmission and the downlink transmission being in the duration during which the uplink transmission is prioritized, and a second part of the duration of the collision between the uplink transmission and the downlink transmission being in the duration during which the downlink transmission is prioritized:
during the duration of the collision between the uplink transmission and the downlink transmission, it is pre-defined or pre-configured that transmission is performed according to the priority order determined in the first part or transmission is performed according to the priority order determined in the second part;
or,
during the duration of the collision between the uplink transmission and the downlink transmission, it is pre-defined or pre-configured that the uplink transmission is performed preferentially or the downlink transmission is performed preferentially.

25. The method as claimed in any one of claims 15 to 24, wherein the collision between the uplink transmission and the downlink transmission comprises:
the uplink transmission and the downlink transmission occupying a same time-domain unit;
and/or,
a time interval between the uplink transmission and the downlink transmission, less than handover guard time.

26. An apparatus for handling a collision between uplink transmission and downlink transmission, applicable to a terminal that employs a half-duplex frequency division multiplexing manner for communication, comprising:
an order determining module, configured to determine a priority order between the uplink transmission and the downlink transmission in response to the collision between the uplink transmission and the downlink transmission; and
a data transmission module, configured to perform the uplink transmission or receive the downlink transmission from a base station, according to the priority order.

27. An apparatus for handling a collision between uplink transmission and downlink transmission, comprising:
an information transmitting module, configured to transmit transmission indication information to a terminal that employs a half-duplex frequency division multiplexing manner for communication, wherein the transmission indication information is configured to indicate a transmission behavior of the terminal in response to the collision between the uplink transmission and the downlink transmission.

28. A device for handling a collision between uplink transmission and downlink transmission, applicable to a terminal that employs a half-duplex frequency division multiplexing manner for communication, comprising:
a processor; and
a memory for storing instructions executable by the processor;
wherein the processor is configured to:
determine a priority order between the uplink transmission and the downlink transmission in response to the collision between the uplink transmission and the downlink transmission; and
perform the uplink transmission or receive the downlink transmission from a base station, according to the priority order.

29. A device for handling a collision between uplink transmission and downlink transmission, comprising:
a processor; and
a memory for storing instructions executable by the processor;
wherein the processor is configured to:
transmit transmission indication information to a terminal that employs a half-duplex frequency division multiplexing manner for communication, wherein the transmission indication information is configured to indicate a transmission behavior of the terminal in response to the collision between the uplink transmission and the downlink transmission.

30. A non-transitory computer-readable storage medium having stored therein computer programs that, when executed by a processor, causes the processor to perform actions in the method as claimed in any one of claims 1 to 14 or actions in the method as claimed in any one of claims 15 to 25.
